# EUROPÄISCHE PATENTSCHRIFT

(11) **EP 3 192 725 B1**
(45) Veröffentlichungstag und Bekanntmachung des Hinweises auf die Patenterteilung: **17.07.2019**
(21) Anmeldenummer: 17150130.7
(22) Anmeldetag: 03.01.2017
(51) Int. Cl.: B62D 55/12, F16H 55/30

(54) **KETTENRAD FÜR EIN RAUPENFAHRWERK, RAUPENFAHRWERK MIT EINEM DERARTIGEN KETTENRAD SOWIE KRAN MIT EINEM DERARTIGEN RAUPENFAHRWERK**
SPROCKET FOR A CRAWLER UNDERCARRIAGE, CRAWLER UNDERCARRIAGE HAVING SUCH A SPROCKET, AND CRANE HAVING SUCH A CRAWLER UNDERCARRIAGE
ROUE À CHAÎNE POUR CHÂSSIS CHENILLÉ, CHÂSSIS CHENILLÉ COMPRENANT UNE TELLE ROUE À CHAÎNE ET GRUE COMPRENANT UN TEL CHÂSSIS CHENILLÉ

(30) Priorität: 12.01.2016 DE 102016200224
(43) Veröffentlichungstag der Anmeldung: 19.07.2017
(73) Patentinhaber: Terex Global GmbH, 8200 Schaffhausen (CH)
(72) Erfinder: Weckbecker, Alfons, 66482 Zweibrücken (DE); Rutz, Werner, 66851 Queidersbach (DE)
(74) Vertreter: Moser Götze & Partner Patentanwälte mbB

(56) Entgegenhaltungen:
- EP-A2- 1 033 509
- US-A- 4 487 088
- US-A1- 2009 209 380

## Beschreibung

Die Erfindung betrifft ein Kettenrad eines Raupenfahrwerks, ein Raupen-fahrwerk mit einem derartigen Kettenrad sowie einen Kran mit einem derartigen Raupenfahrwerk.

Die Patentschrift US 4,487,088 offenbart einen Kettentrieb für die Entleerung von Speichersilos mit einem verbesserten Zahnrad mit einer Vielzahl an Kettenzähnen im Eingriff mit einer Kette. Die Zahnabstände sind identisch ausgeführt. Auch wird ein Raupenfahrwerk beschrieben.

Die europäische Patentanmeldung EP 1 033 509 A2 betrifft einen Kettenantriebsmechanismus mit zwei Kettenrädern, die jeweils eine Vielzahl von Zähnen aufweisen und wobei eine Drehbewegung mit großer Präzision übertragen wird. Das Kettenrad besitzt zwölf Zähne. Ein Zahnabstand ist insbesondere gleichbleibend zwischen den einzelnen Zähnen ausgeführt.

Auch die Patentanmeldung US 2009/209380 A1 zeigt ein Kettenrad einer Antriebskette mit einer Vielzahl von Zähnen. Die dargestellte Aufteilung in Umfangsabschnitte sieht sechs Abschnitte mit je drei Zähnen vor. Ein Kantenwinkel der Zähne wird als unterschiedlich beschrieben.

Ein Kettenrad eines Raupenfahrwerks ist aus der DE 100 22 080 C2 bekannt, wobei eine Unterteilung in zwei Umfangsabschnitte stattfindet und die Abstände zwischen einzelnen Zähnen eines Umfangsabschnitts jeweils zunehmen beziehungsweise abnehmen. Ein Kettenrad eines Raupenfahrwerks wird als Turas bezeichnet.

Es ist die Aufgabe der vorliegenden Erfindung, ein Raupenfahrwerk zu verbessern.

Diese Aufgabe ist erfindungsgemäß gelöst durch ein Kettenrad mit den im Anspruch 1 angegebenen Merkmalen, durch ein Raupenfahrwerk mit den im Anspruch 6 angegebenen Merkmalen sowie durch einen Kran mit den im Anspruch 7 angegebenen Merkmalen.

Erfindungsgemäß wurde erkannt, dass es eine ungerade Anzahl an Umfangsabschnitten an einem Kettenrad ermöglicht, vorteilhaft den Durchmesser eines Kettenrads zu verkleinern. Ein Verkleinern des Durchmessers des Kettenrads bewirkt eine Erhöhung der Vortriebskraft. Insbesondere gegenüber dem Kettenrad gemäß der DE 100 22 080 C2, das zwei identische Umfangsabschnitte mit je fünf Zähnen über einen Umfangswinkel von 180° verteilt aufweist, ist eine Reduzierung der Anzahl der Kettenzähne verbessert und insbesondere unkompliziert möglich. Die Kettenzähne sind auf die mehreren, gleichartigen, insbesondere identischen, Umfangsabschnitte entlang des Kettenrades aufgeteilt. Eine ungerade Anzahl an Kettenzähnen ermöglicht eine erhöhte Flexibilität bei der Zahnteilung. Die Kettenzähne dienen zum Eingreifen in die Kette des Raupenfahrwerks. Um bei gleichbleibendem, also gleich großem, Kettenrad ein entsprechendes vergrößertes Antriebsdrehmoment zur Verfügung zu stellen, wäre ein leistungsstärkerer Antrieb erforderlich. Dadurch würden zusätzliche Kosten anfallen. Das erfindungsgemäße Kettenrad ermöglicht eine Kostenreduktion hinsichtlich der Fahrantriebe, da das von einem Antrieb zur Verfügung zu stellende Antriebsdrehmoment kleiner dimensioniert werden kann, da erfindungsgemäß der Vortrieb erhöht ist. Durch die Reduzierung der Größe des Kettenrades kann die Gesamtlänge der Kette für das Raupenfahrwerk optimiert und dadurch eine Kostenreduktion herbeigeführt werden. Das erfindungsgemäße Kettenrad verursacht weniger Geräuschemissionen. Der mechanische Verschleiß ist reduziert. Bei einem Wechsel von Vorwärtsfahrt auf Rückwärtsfahrt, insbesondere bei einer Bergabfahrt, wird eine Bodenplatte immer zwischen einem engen Zahnradpaar gehalten und dadurch ein Auflaufen eines Kettenzahns auf die Kette verhindert, was zu einer Beschädigung und/oder Zerstörung der Kette führen kann. Eine derartige Beschädigung ist mit dem erfindungsgemäßen Kettenrad im Wesentlichen ausgeschlossen. Das erfindungsgemäße Kettenrad ermöglicht es, ein Getriebe mit reduziertem Antriebsmoment zu koppeln. Dadurch kann der Durchmesser des erfindungsgemäßen Kettenrades verringert werden, um eine gleichbleibende Vortriebskraft mit dem Raupenfahrwerk zur Verfügung zu stellen. Ein erfindungsgemäßes Kettenrad mit unterschiedlichen Zahnabständen ermöglicht zudem eine vorteilhafte Krafteinleitung von dem Kettenrad in die Kette. Überraschend wurde gefunden, dass es gerade nicht erforderlich ist, dass die Zahnabstände innerhalb eines Umfangsabschnitts kontinuierlich aufsteigend bzw. kontinuierlich absteigend angeordnet sein müssen. Es ist insbesondere denkbar, dass die Zahnabstände in Umfangsrichtung innerhalb eines Umfangsabschnitts zunächst ansteigen und anschließend wieder abfallen. Daraus ergibt sich ein grundlegender Unterschied gegenüber der DE 100 22 080 C2.

Drei gleichartige, insbesondere identische, Umfangsabschnitte gemäß Anspruch 2 gewährleisten eine vorteilhafte Aufteilung der Umfangsabschnitte um die Drehachse des Kettenrades. Jeder Umfangsabschnitt erstreckt sich bezogen auf die zentrale Drehachse um einen Drehwinkel von genau 120°. Ein derartiger Winkel ist insbesondere als vorteilhafter Umschlingungswinkel für die Kette an dem Kettenrad vorteilhaft.

Genau drei Kettenzähne gemäß Anspruch 3 ermöglichen eine vorteilhafte Gestaltung eines Kettenrads mit neun Kettenzähnen. Insbesondere ermöglicht ein derartiges Kettenrad eine vorteilhafte Reduzierung der Anzahl der Kettenzähne von aus dem Stand der Technik bekannten Kettenrädern mit zehn Zähnen auf ein erfindungsgemäßes Kettenrad mit neun Zähnen.

Ein Kettenrad gemäß Anspruch 4, bei dem alle Kettenzähne im Wesentlichen identisch ausgeführt sind, ermöglicht eine gleichartige Krafteinleitung von dem Kettenrad in die Kette. Insbesondere sind alle Kettenzähne exakt identisch ausgeführt.

Ein Kettenrad mit genau neun Kettenzähnen gemäß Anspruch 5 ermöglicht eine vorteilhafte Kraftübertragung von dem Raupenantrieb auf die Kette des Raupenfahrwerks.

Ein Raupenfahrwerk mit einem erfindungsgemäßen Kettenrad sowie ein Kran mit einem derartigen Raupenfahrwerk weisen im Wesentlichen die Vorteile des Kettenrades selbst auf, worauf hiermit verwiesen wird.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:

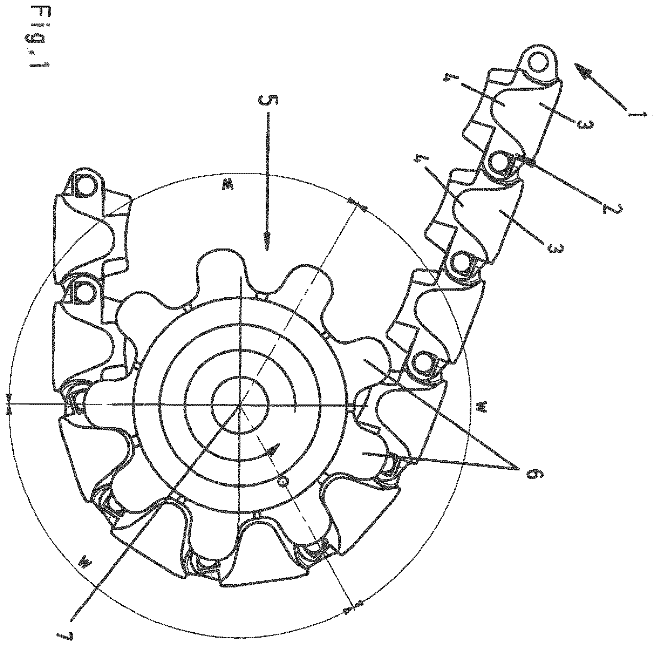

Fig. 1 eine schematische Teil-Seitenansicht eines Raupenfahr-werks mit einem erfindungsgemäßen Kettenrad und
Fig. 2 eine vergrößerte Detailansicht des Kettenrads gemäß Fig. 1.

Ein Raupenfahrwerk 1 kann beispielsweise an einem Kran, insbesondere an einem Raupenkran, verwendet werden. Das Raupenfahrwerk 1 kann auch für einen Bagger oder ein anderes Arbeitsgerät dienen.

Das Raupenfahrwerk 1 umfasst eine umlaufende Endloskette 2 mit gelenkig miteinander verbundenen Kettengliedern 3. Jedes Kettenglied 3 weist einen Eingriffsnocken 4 auf.

Das Raupenfahrwerk 1 weist ferner ein Kettenrad 5 mit insgesamt 9 Kettenzähnen 6 auf. Das Kettenrad 5 ist um eine Drehachse 7 mittels eines nicht dargestellten Antriebs über ein nicht dargestelltes Getriebe um die Drehachse 7 antreibbar. In Abhängigkeit der Antriebsdrehrichtung um die Drehachse 7 ist bei gleichläufiger Antriebsrichtung der beiden Raupen-fahrwerke 1 eine Vorwärtsfahrt oder eine Rückwärtsfahrt bzw. eine Drehung des Krans bei gegenläufiger Antriebsrichtung der beiden Raupen-fahrwerke 1 möglich.

Das Kettenrad 5 weist eine im Wesentlichen zylindrische Zentralscheibe 8 auf. Am äußeren Umfang der Zentralscheibe 8 sind die Kettenzähne 6 einteilig angeformt. Die Kettenzähne 6 sind in drei gleichartigen Umfangsabschnitten angeordnet. Das bedeutet, dass jeweils drei Kettenzähne 6 in einem Umfangsabschnitt angeordnet sind.

Jeder Umfangsabschnitt erstreckt sich über einen Umfangswinkel von 120° bezogen auf die Drehachse 7. Es ist klar, dass bei einer abweichenden Anzahl n der Umfangsabschnitte der Umfangswinkel w um die Drehachse 7 sich verändert. Allgemein gilt: w = 360°/n, wobei n ungerade ist

Wesentlich ist, dass eine ungerade Anzahl an Umfangsabschnitten vorgesehen ist. Gemäß dem gezeigten Ausführungsbeispiel sind neun Ketten-zähne 6 vorgesehen, die auf drei Umfangsabschnitte gleichverteilt angeordnet sind.

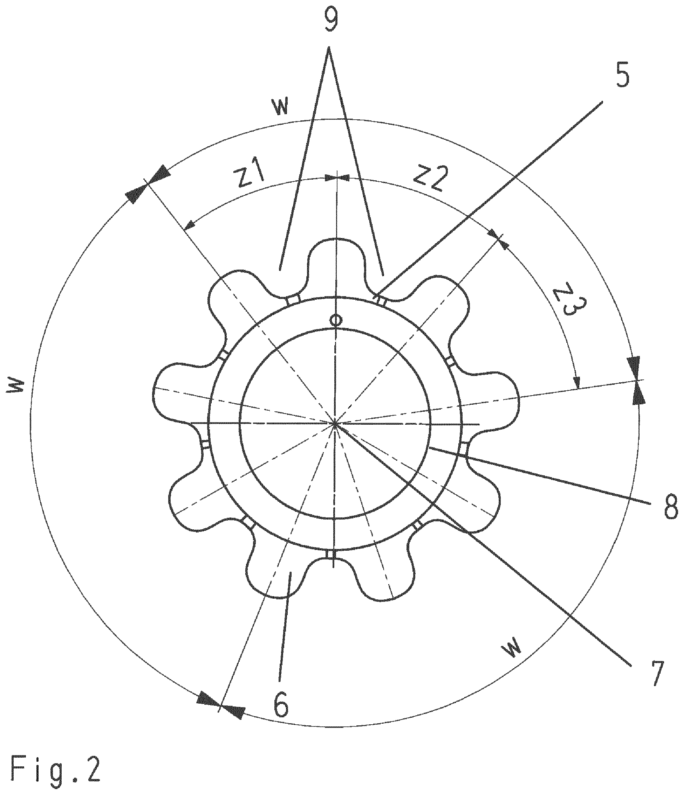

Nachfolgend wird der Aufbau des Kettenrades 5 anhand von Fig. 2 näher erläutert. Die Kettenzähne 6 sind im Wesentlichen identisch ausgeführt. Die Kettenzähne 6 sind jeweils nockenartig ausgeführt. Zwei benachbarte Kettenzähne 6 sind durch einen Zahnzwischenraum 9 voneinander getrennt. Der Zahnzwischenraum 9 ist im Wesentlichen als abgerundete Nut ausgeführt. Zwei benachbarte Kettenzähne 6 weisen einen Zahnabstand z1, z2 oder z3 auf. Der Zahnabstand z1, z2 oder z3 ist definiert als Drehwinkelabstand um die Drehachse 7 von der jeweiligen Zahnmitte benachbarter Kettenzähne 6. Innerhalb eines Umfangsabschnitts mit dem Drehwinkel w um die Drehachse 7 summieren sich die Zahnabstände z1, z2 und z3 zu dem Umfangswinkel w des Umfangsabschnitts. Es gilt: w = z1 + z2 + z3.

Gemäß dem Ausführungsbeispiel in Fig. 2 gilt bezüglich einer Drehrichtung um die Drehachse 7 im Uhrzeigersinn: z1 < z2, z2 > z3. Das bedeutet, dass beginnend mit dem ersten Zahnabstand des Umfangsabschnitts in Drehrichtung, also im Uhrzeigersinn, der erste Zahnabstand z1 auf den zweiten Zahnabstand z2 ansteigt. Von dem zweiten Zahnabstand z2 wird dieser auf den dritten Zahnabstand z3 reduziert. Im Umkehrschluss bedeutet dies, dass ein maximaler Zahnabstand in einem mittleren Bereich des Umfangsabschnitts angeordnet ist. Insbesondere bedeutet dies, dass auch bei einer Drehung des Kettenrads in entgegengesetzter Richtung um die Drehachse 7, also gemäß Fig. 2 im Gegenuhrzeigersinn, zunächst auf einen kleineren Zahnabstand z3 ein größerer Zahnabschnitt z2 folgt, dem sich ein wieder kleinerer Zahnabstand z1 anschließt.

Der erste Zahnabstand z1 bildet einen minimalen Zahnabstand. Die beiden den ersten Zahnabstand z1 begrenzenden Kettenzähne 6 werden als enges Zahnpaar bezeichnet.

Bei einem Antrieb des Raupenfahrwerks 1 erfolgt eine Übergabe der Kette 2 von dem etwa auf zwei Uhr angeordneten Kettenzahn 6 auf dem etwa auf sechs Uhr angeordneten Kettenzahn 6.

## Patentansprüche

1. Kettenrad (5) eines Raupenfahrwerks (1) mit mehreren Kettenzähnen (6) zum Eingreifen in eine Kette (2), wobei die Kettenzähne (6) in mehreren gleichartigen Umfangsabschnitten entlang des Kettenrades (5) angeordnet sind, wobei eine ungerade Anzahl an Umfangsabschnitten vorgesehen ist, wobei jeder Umfangsabschnitt eine ungerade Anzahl an Kettenzähnen (6) aufweist, **gekennzeichnet, durch** unterschiedliche Zahnabstände (z₁, z₂, z₃) zwischen zwei benachbarten Kettenzähnen (6), wobei die Zahnabstände (z₁, z₂, z₃) in Umfangsrichtung innerhalb eines Umfangsabschnitts zunächst ansteigen und anschließend wieder abfallen.

2. Kettenrad (5) gemäß Anspruch 1, **dadurch gekennzeichnet, dass** genau drei gleichartige Umfangsabschnitte vorgesehen sind.

3. Kettenrad (5) gemäß Anspruch 1, **dadurch gekennzeichnet, dass** jeder Umfangsabschnitt genau drei Kettenzähne (6) aufweist.

4. Kettenrad (5) gemäß einem der vorstehenden Ansprüche, **dadurch gekennzeichnet, dass** alle Kettenzähne (6) im Wesentlichen identisch ausgeführt sind.

5. Kettenrad (5) gemäß einem der vorstehenden Ansprüche, **dadurch gekennzeichnet, dass** genau neun Kettenzähne (6) vorgesehen sind.

6. Raupenfahrwerk (1) mit einem Kettenrad (5) gemäß einem der vorstehenden Ansprüche.

7. Kran mit einem Raupenfahrwerk (1) gemäß Anspruch 6.

## Claims

1. Sprocket (5) for a crawler running gear unit (1) comprising a plurality of sprocket teeth (6) for engaging into a track (2), wherein the sprocket teeth (6) are arranged in a plurality of similar circumferential segments along the sprocket (5), wherein an odd number of circumferential segments is provided, wherein each circumferential segment has an odd number of sprocket teeth (6), **characterised by** different teeth intervals (z₁, z₂, z₃) between two adjacent sprocket teeth (6), wherein the tooth intervals (z₁, z₂, z₃) in the circumferential direction within a circumferential segment initially increase and subsequently decrease.

2. Sprocket (5) as claimed in claim 1, **characterised in that** precisely three similar circumferential segments are provided.

3. Sprocket (5) as claimed in claim 1, **characterised in that** each circumferential segment has precisely three sprocket teeth (6).

4. Sprocket (5) as claimed in any one of the preceding claims, **characterised in that** all of the sprocket teeth (6) are substantially identical in configuration.

5. Sprocket (5) as claimed in any one of the preceding claims, **characterised in that** precisely nine sprocket teeth (6) are provided.

6. Crawler running gear unit (1) comprising a sprocket (5) as claimed in any one of the preceding claims.

7. Crane comprising a crawler running gear unit (1) as claimed in claim 6.

## Revendications

1. Roue de chaîne (5) destinée à un mécanisme de roulement à chenille (1) et comprenant une pluralité de dents de chaîne (6) destinées à s'engager dans une chaîne (2), les dents de chaîne (6) étant disposées dans une pluralité de parties périphériques similaires le long de la roue de chaîne (5), un nombre impair de parties périphériques étant prévues, chaque partie périphérique comprenant un nombre impair de dents de chaîne (6), **caractérisée par** des espacements de dent différents (z₁, z₂, z₃) entre deux dents de chaîne (6) adjacentes, et en ce que les espacements de dent (z₁, z₂, z3) dans la direction périphérique à l'intérieur d'une partie périphérique augmente initialement puis diminue à nouveau.

2. Roue de chaîne (5) selon la revendication 1, **caractérisée en ce que** exactement trois parties périphériques similaires sont prévues.

3. Roue de chaîne (5) selon la revendication 1, **caractérisée en ce que** chaque partie périphérique comporte exactement trois dents de chaîne (6).

4. Roue de chaîne (5) selon l'une des revendications précédentes, **caractérisée en ce que** toutes les dents de chaîne (6) sont sensiblement identiques.

5. Roue de chaîne (5) selon l'une des revendications précédentes, **caractérisée en ce que** exactement neuf dents de chaîne (6) sont prévues.

6. Mécanisme de roulement à chenille (1) comprenant une roue de chaîne (5) selon l'une des revendications précédentes.

7. Grue comprenant un mécanisme de roulement à chenille (1) selon la revendication 6.
